# EUROPÄISCHE PATENTSCHRIFT

(11) **EP 2 387 499 B1**
(45) Veröffentlichungstag und Bekanntmachung des Hinweises auf die Patenterteilung: **24.04.2013**
(21) Anmeldenummer: 09760839.2
(22) Anmeldetag: 24.11.2009
(51) Int. Cl.: B29D 30/00, B29C 33/04, B29C 35/02, B29C 35/04, B29C 43/10, G01J 5/00

(54) **VORRICHTUNG ZUM VULKANISIEREN VON FAHRZEUGREIFEN MIT EINER HEIZPRESSE**
APPARATUS FOR VULCANIZING OF TIRES IN A HOT PRESS
APPAREIL POUR LA VULCANISATION DES PNEUMATIQUES DANS UNE PRESSE À CHAUD

(30) Priorität: 13.01.2009 DE 102009003342
(43) Veröffentlichungstag der Anmeldung: 23.11.2011
(73) Patentinhaber: Continental Reifen Deutschland GmbH, 30165 Hannover (DE)
(72) Erfinder: FRICKE, Bernd, 31319 Sehnde (DE); PRIMKE, Boris, 31535 Neustadt (DE); RAMM, Michael, 30827 Garbsen (DE); HACKBARTH, Rolf, 30926 Seelze (DE)
(74) Vertreter: Finger, Karsten
(86) Internationale Anmeldenummer: PCT/EP2009/065710
(87) Internationale Veröffentlichungsnummer: WO 2010/081581

(56) Entgegenhaltungen:
- EP-A1- 1 636 025
- EP-A2- 1 415 795
- WO-A1-2006/059051
- GB-A- 1 273 579
- JP-A- 1 113 211

## Beschreibung

Die Erfindung betrifft eine Vorrichtung zum Vulkanisieren von Fahrzeugreifen mit einer Heizpresse.

Die Reifenvulkanisation erfolgt in Heizpressen, bei der der Reifenrohling in geeignete Formsegmente eingesetzt und unter Einwirkung von Wärme sowie Druck vulkanisiert wird. Auf der Reifeninnenseite wird ein flexibler Balg an den Reifen angelegt, der mit einem dampfförmigen Heizmedium beaufschlagt wird und auf diese Weise dem Reifenrohling von der Innenseite die notwendige Vulkanisationsenergie zuführt. Die Zuführung der Vulkanisationsenergie über die Reifeninnenseite wird als Innenheizung bezeichnet. Die erforderlichen Vulkanisationstemperaturen und die Vulkanisationsdauer sind von verschiedenen Parametern abhängig, z.B. von dem Reifentyp.

Es ist üblich, die Temperatur des Heizmediums zu messen, die dem Balg zugeführt wird. Bei herkömmlichen Heizpressen sind die Temperatursensoren beispielsweise in Rohrleitungen oder am Mittenmechanismus angeordnet. Eine andere Anordnung des Temperatursensors offenbart die US 5,055,245, bei der der Temperatursensor im Heizmediumhohlraum direkt über der Öffnung der Zuleitung für das Heizmedium angeordnet ist. Ein wesentlicher Nachteil dieser Art der Anordnung des Temperatursensors besteht darin, dass die Temperatur an Stellen gemessen wird, die weit von dem zu vulkanisierenden Reifen entfernt liegen. Bei dieser Art der Temperaturmessung wird fälschlicherweise angenommen, dass die Temperatur an allen Stellen im Heizmedium homogen verteilt vorliegt und konstant ist. Im Balg oder in unmittelbarer Nähe der Balginnenseite kann jedoch die Temperatur erheblich von einer davon entfernt liegenden Stelle abweichen.

Die EP1415795A2 offenbart eine Vorrichtung zum Messen der Temperatur in einem Vulkanisationsbalg.

Die JP01113211A, EP163025A1, WO2006/059051A1 und GB1273579A offenbaren weitere Vorrichtungen bei denen eine Temperaturmessung erfolgt.

Der Erfindung liegt die Aufgabe zugrunde, eine Vorrichtung zum Vulkanisieren von Fahrzeugreifen bereitzustellen, mit der die Messung der Vulkanisationstemperatur an den relevanten Stellen der Innenheizung durchgeführt wird.

Gelöst wird die Aufgabe gemäß Anspruch 1.

Ein Vorteil der Erfindung ist insbesondere darin zu sehen, dass durch den erfindungsgemäßen Temperatursensor die Temperaturmessung direkt an den für die Reifenvulkanisation relevanten Stellen der Innenheizung durchgeführt wird und über die darüber erfolgte Regelung jeder Reifen optimal vulkanisiert wird.

Der Strahlungspyrometer misst die Temperatur direkt an der Innenfläche des Heizbalges. Die Temperaturmessung erfolgt somit direkt an den relevanten Stellen der Innenheizung, an denen der Wärmeübergang zum zu vulkanisierenden Fahrzeugreifen erfolgt. Bei einer Abweichung von einer Temperatur-Soll-Kurve kann über einen entsprechenden Regelalgorithmus die erforderliche Temperatur präzise nachgeregelt werden. Auf diese Weise lassen sich Fahrzeugreifen herstellen, die eine hohe Produktqualität aufweisen. Ein weiterer Vorteil besteht darin, dass mit der präzisen Temperaturmessung an den relevanten Stellen in der Innenheizung ebenfalls eine verbesserte Prozessführung möglich ist, die mit einer Energieeinsparung verbunden ist oder die Heizzeiten verkürzt.

Es ist vorgesehen, dass das Strahlungspyrometer die Temperaturen an exakt vorgegebenen Positionen auf der Balginnenseite misst. Der Strahlungspyrometer kann im Balghohlraum so ausgerichtet werden, dass er an genau vorgegebenen Stellen die relevanten Temperaturen an der Balgoberfläche misst. Auf diese Weise können insbesondere die heizkritischen Stellen des zu vulkanisierenden Fahrzeugreifens überwacht werden, die maßgeblich die Produktqualität des Fahrzeugreifens beeinflussen.

In einer vorteilhaften Weiterbildung der Erfindung ist vorgesehen, dass der Strahlungspyrometer die Temperaturen auf der Balginnenseite misst, an der Position auf der Balginnenseite an der gegenüberliegend die Reifenschulter des zu vulkanisierenden Fahrzeugreifens anliegt. Der Bereich in der Reifenschulter ist eine heizkritische Stelle des Fahrzeugreifens. In diesen Bereichen sollte der gemessene Temperatur-Ist-Wert mit dem vorgegebenen Temperatur-Soll-Wert im Wesentlichen übereinstimmen, damit der Fahrzeugreifen eine hohe Produktqualität erreicht.

In einer weiteren vorteilhaften Weiterbildung der Erfindung ist vorgesehen, dass der Strahlungspyrometer im Balghohlraum am Mittenmechanismus der Heizpresse angeordnet ist. Die Anordnung des Strahlungspyrometers am Mittenmechanismus der Heizpresse lässt sich konstruktiv relativ einfach umsetzen. Außerdem kann der Strahlungspyrometer von dieser Position aus flexibel unterschiedliche heizkritische Stellen auf der Innenseite der Balgoberfläche überwachen.

In einer weiteren vorteilhaften Weiterbildung der Erfindung ist vorgesehen, dass die Temperaturmessungen in regelmäßigen Zeitabständen von ca. 5 bis 15 Sekunden erfolgen. Eine Temperaturmessung in diesen Zeitabständen ist ausreichend, um auf der einen Seite die Datenmenge gering zu halten und auf der anderen Seite eine präzise Temperaturregelung umzusetzen.

In einer weiteren vorteilhaften Weiterbildung der Erfindung ist vorgesehen, dass mit den Temperaturmessungen eine gezielte Regelung der Balgoberflächentemperatur des Balges erfolgt. Mit Hilfe der kontinuierlichen Temperaturmessungen an den heizkritischen Stellen direkt an der Balgoberfläche lässt sich nunmehr eine effektive Temperaturregelung umsetzen, die die tatsächlich relevanten Temperaturen im Heizbalg berücksichtigt.

In einer weiteren vorteilhaften Weiterbildung der Erfindung ist vorgesehen, dass die Regelung in Abhängigkeit einer Abweichung vom Temperatur-Sollwert über eine angepasste Dampfstoßlänge und/oder eine Anpassung des Dampfdruckes erfolgt. Die Dampfstoßlänge und der Dampfdruck stellen geeignete Regelungsparameter dar, um eine effektive Temperaturregelung umzusetzen.

In einer weiteren vorteilhaften Weiterbildung der Erfindung ist vorgesehen, dass das Strahlungspyrometer die Temperaturdaten über eine drahtlose Funkverbindung an einen Signalempfänger übermittelt. Die drahtlose Funkverbindung erleichtert den Datenaustausch zwischen dem Strahlungspyrometer und dem Signalempfänger, der außerhalb der Heizpresse angeordnet ist.

Anhand eines Ausführungsbeispieles soll die Erfindung näher erläutert werden. Es zeigen:
- Fig. 1:: eine erfindungsgemäße Vorrichtung mit einem im Balg angeordneten Temperatursensor und
- Fig. 2:: ein Temperatur-Zeit-Diagramm.

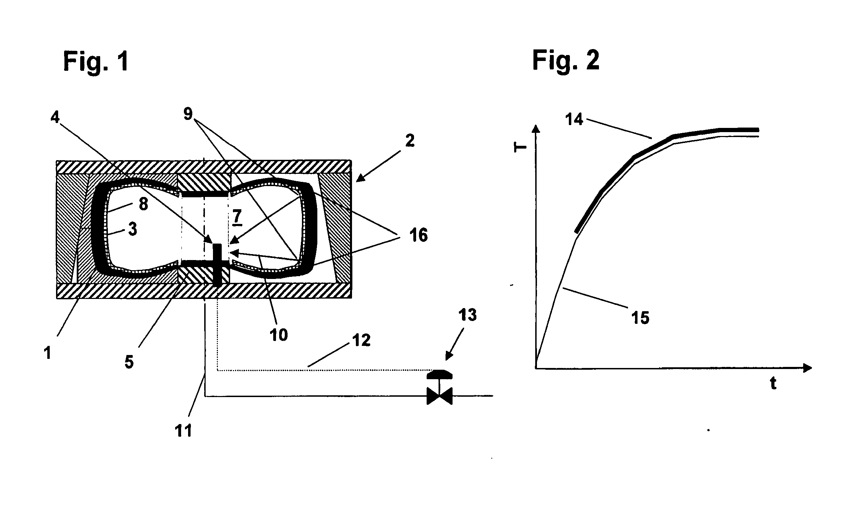

Fig. 1 zeigt eine erfindungsgemäße Vorrichtung zum Vulkanisieren von Fahrzeugreifen in einem Radialschnitt. Der zu vulkanisierende Reifen 1 ist in der Heizpresse 2 angeordnet, die mit einem dampfförmigen Heizmedium betrieben wird. Der Balg 3 der Heizpresse 2 liegt elastisch an der Oberfläche der Reifeninnenseite an und ist über nicht dargestelle Fixierungspunkte mit der Heizpresse verbunden. Das dampfförmige Heizmedium wird über eine Zuleitung 11 dem Heizmediumhohlraum bzw. Balghohlraum 7 zugeführt. Der zu vulkanisierende Reifen 1 bekommt die notwendige Vulkanisationstemperatur über die Balgwand des Balges 3 zugeführt.

Der Temperatursensor in Form eines Strahlungspyrometers 4 ist im Balghohlraum 7 am Mittenmechanismus 5 der Heizpresse 2 angeordnet. Der Strahlungspyrometer 4 reicht dergestalt in den Balghohlraum hinein, dass dieser indirekt unterschiedliche Temperaturen auf der Balginnenseite 8 des Heizbalges 3 messen kann. Es handelt sich bei dem Strahlungspyrometer um einen Temperatursensor, der durch das dampfförmige Medium im Balghohlraum eine indirekte Temperaturmessung durchführt. Dabei wird die von der Balginnenseite emittierte Strahlungsenergie 10 mit dem Strahlungspyrometer 4 erfasst und in einen entsprechenden Temperaturwert umgerechnet. Die Positionen 9 auf der Balginnenseite stellen zwei heizkritische Stellen dar, die gegenüberliegend zur Reifenschulter des Reifens 1 angeordnet sind. Die einzelnen Sensoren des Strahlungspyrometers 4 sind bei diesem Ausführungsbeispiel so ausgerichtet, dass eine Temperaturmessung von diesen heizkritischen Positionen 9 auf der Balgoberfläche 8 durchgeführt werden. Bei diesem Vorgang wird die jeweils emittierte Strahlungsenergie 10 gemessen und in einen entsprechenden Temperaturwert umgerechnet. Das Strahlungspyrometer 4 steht über die Verbindungsleitung 12 mit einer Auswerteeinheit in Verbindung, die das Regelventil 13 beeinflusst. Das Regelventil 13 regelt den Dampfdruck und die Dampfstoßlänge. Über diese beiden Regelparameter erfolgt eine effektive Temperaturregelung der Innenheizung. Bei einer Abweichung des mit dem Strahlungspyrometer gemessenen Temperatur-Ist-Wertes erfolgt über einen Regelalgorithmus eine Temperaturregelung. Diese Temperaturregelung erfolgt beispielsweise über eine angepasste Dampfstoßlänge oder einen angepassten Dampfdruck. Ziel der Regelung ist es, den gemessenen Temperatur-Ist-Wert wieder mit der vorgegebenen Temperatur-Soll-Wert-Kurve in Übereinstimmung zu bringen. Die Dampfstoßlänge ist die Zeit, mit dem der Balghohlraum mit dem Heizdampf beaufschlagt wird. Eine verlängerte Dampfstoßlänge geht im Regelfall mit einer verlängerten Heizzeit einher. Eine Erhöhung des Dampfdruckes steht in direkter Verbindung mit einer Temperaturerhöhung des Heizdampfes. Der Dampfdruck hat somit ebenfalls einen direkten Einfluss auf die Vulkanisationsenergie, die über die Innenheizung zugeführt wird.

Fig. 2 zeigt ein Temperatur-Zeit-Diagramm der Temperaturregelung, die mit der erfindungsgemäßen Vorrichtung durchgeführt werden kann. Auf der Abszisse ist die Temperatur an der Balgoberfläche einer heizkritischen Stelle aufgetragen, beispielsweise an der Position 9 in der Fig. 1. Auf der Ordinate des Diagramms ist die Heizzeit t in Sekunden aufgetragen. Die Temperatur-Soll-Kurve 14 stellt die ideale Temperaturkurve dar, die für einen optimal ausgeheizten Fahrzeugreifen erforderlich ist. Die Temperatur-Ist-Kurve 15 stellt die Temperaturwerte dar, die mit dem Strahlungspyrometer an der Balgoberfläche an den heizkritischen Positionen gemessen werden. Über einen entsprechenden Regelalgorithmus wird der Temperatur-Ist-Wert möglichst nahe an die Temperatur-Soll-Kurve 14 herangeführt. Die Regelung erfolgt über eine entsprechende Anpassung des Dampfdruckes oder über eine entsprechend angepasste Dampfstoßlänge. Über diese Regelung werden Fahrzeugreifen mit einer besonders hohen Produktqualität gefertigt.

### Bezugszeichenliste

### (ist Teil der Beschreibung)

- 1: Reifen
- 2: Heizpresse
- 3: Balg
- 4: Strahlungspyrometer
- 5: Mittenmechanismus
- 6: Außenheizung
- 7: Balghohlraum
- 8: Balginnenseite
- 9: Position auf Balginnenseite im Bereich der Reifenschulter
- 10: emittierte Strahlungsenergie
- 11: Dampfdruckleitung
- 12: Verbindung zum Regelventil
- 13: Regelventil
- 14: Temperatur-Soll-Kurve
- 15: Temperatur-Ist-Kurve
- 16: Reifenschulter

- T: Balgoberflächentemperatur
- T: Zeit

## Patentansprüche

1. Vorrichtung zum Vulkanisieren von Fahrzeugreifen (1) mit einer Heizpresse (2), einem mit einem dampfförmigen Heizmedium beheizbaren Balg (3) und einem Temperatursensor (4) zur Messung der Vulkanisationstemperatur,
wobei der Balg (3) an der Reifeninnenseite des zu vulkanisierenden Fahrzeugreifens (1) angeordnet ist und die erforderliche Wärmenergie zum Vulkanisieren durch den Balg (3) zum Fahrzeugreifen (1) geleitet wird,
**dadurch gekennzeichnet, dass**
im Balghohlraum (7) ein Temperatursensor in Form eines Strahlungspyrometers (4) angeordnet ist, mit dem an mindestens einer Stelle an der Balginnenseite (8) eine indirekte Temperaturmessung über eine Messung der von der Balginnenseite (8) emittierten Strahlungsenergie (10) erfolgt,
wobei der Strahlungspyrometer (4) die Temperaturen an exakt vorgegebenen Positionen (9) auf der Balginnenseite (8) misst.

2. Vorrichtung nach Anspruch 1,
**dadurch gekennzeichnet, dass**
der Strahlungspyrometer (4) die Temperaturen auf der Balginnenseite (8) misst, an der Postition auf der Balginnenseite (8) an der gegenüberliegend die Reifenschulter (16) des zu vulkanisierenden Fahrzeugreifens (1) anliegt.

3. Vorrichtung nach einem der vorhergehenden Ansprüche,
**dadurch gekennzeichnet, dass**
der Strahlungspyrometer (4) im Balghohlraum (7) am Mittenmechanismus (5) der Heizpresse (2) angeordnet ist.

4. Vorrichtung nach einem der vorhergehenden Ansprüche,
**dadurch gekennzeichnet, dass**
die Temperaturmessungen in regelmäßigen Zeitabständen von ca. 5 bis 15 Sekunden erfolgen.

5. Vorrichtung nach einem der vorhergehenden Ansprüche,
**dadurch gekennzeichnet, dass**
mit den Temperaturmessungen eine gezielte Regelung der Balgoberflächentemperatur des Balges (3) erfolgt.

6. Vorrichtung nach einem der vorhergehenden Ansprüche,
**dadurch gekennzeichnet, dass**
die Regelung in Abhängigkeit einer Abweichung vom Temperatur-Sollwert über eine angepasste Dampfstoßlänge und/oder eine Anpassung des Dampfdruckes erfolgt.

7. Vorrichtung nach einem der vorhergehenden Ansprüche,
**dadurch gekennzeichnet, dass**
der Strahlungspyrometer die Temperaturdaten über eine drahtlose Funkverbindung an einen Signalempfänger übermittelt.

## Claims

1. Device for vulcanizing vehicle tires (1) with a heating press (2), a bladder (3), which can be heated with a vaporous heating medium, and a temperature sensor (4), for measuring the vulcanizing temperature, the bladder (3) being arranged on the inside of the vehicle tire (1) to be vulcanized and the required thermal energy for vulcanizing being directed to the vehicle tire (1) through the bladder (3), **characterized in that,** arranged in the bladder cavity (7) is a temperature sensor in the form of a radiation pyrometer (4), with which an indirect temperature measurement is performed at at least one location on the inside (8) of the bladder by means of a measurement of the radiant energy (10) emitted by the inside (8) of the bladder, wherein the radiation pyrometer (4) measures the temperatures at exactly predetermined positions (9) on the inside (8) of the bladder.

2. Device according to Claim 1, **characterized in that** the radiation pyrometer (4) measures the temperatures on the inside (8) of the bladder, at the position on the inside (8) of the bladder opposite where the tire shoulder (16) of the vehicle tire (1) to be vulcanized is lying against the bladder.

3. Device according to either of the preceding claims, **characterized in that** the radiation pyrometer (4) is arranged in the bladder cavity (7) on the central mechanism (5) of the heating press (2).

4. Device according to one of the preceding claims, **characterized in that** the temperature measurements are performed at regular time intervals of about 5 to 15 seconds.

5. Device according to one of the preceding claims, **characterized in that** a specific control of the surface temperature of the bladder (3) is performed with the temperature measurements.

6. Device according to one of the preceding claims, **characterized in that** the control is performed in dependence on a deviation from the setpoint temperature value by means of an adapted length of the blast of steam and/or adaptation of the steam pressure.

7. Device according to one of the preceding claims, **characterized in that** the radiation pyrometer transmits the temperature data to a signal receiver via a wireless radio link.

## Revendications

1. Dispositif pour la vulcanisation de pneus de véhicules (1) comportant une presse chauffante (2), un soufflet pouvant être chauffé (3) par un milieu chauffant générateur de vapeur et un capteur de température (4) destiné à mesurer la température de vulcanisation, dans lequel le soufflet (3) est disposé sur la face interne du pneu de véhicule (1) à vulcaniser et l'énergie thermique nécessaire à la vulcanisation est acheminée par l'intermédiaire du soufflet (3) vers le pneu de véhicule (1),
**caractérisé en ce que**, dans la cavité de soufflet (7), est disposé un capteur de température sous la forme d'un pyromètre à rayonnement (4), au moyen duquel une mesure de température indirecte est effectuée en au moins un point de la face interne de soufflet (8) au moyen d'une mesure de l'énergie de rayonnement (10) émise par la face interne de soufflet (8), dans lequel le pyromètre à rayonnement (4) mesure les températures à des positions prédéterminées exactes (9) sur la face interne de soufflet (8).

2. Dispositif selon la revendication 1, **caractérisé en ce que** le pyromètre à rayonnement (4) mesure les températures sur la face interne de soufflet (8) à la position, sur la face interne de soufflet (8), sur laquelle repose l'épaulement de pneu (16) du pneu de véhicule à vulcaniser (1) situé à l'opposé.

3. Dispositif selon l'une quelconque des revendications précédentes, **caractérisé en ce que** le pyromètre à rayonnement (4) est disposé dans la cavité de soufflet (7) sur le mécanisme central (5) de la presse chauffante (2).

4. Dispositif selon l'une quelconque des revendications précédentes, **caractérisé en ce que** les mesures de température s'effectuent à des intervalles de temps réguliers d'environ 5 à 15 secondes.

5. Dispositif selon l'une quelconque des revendications précédentes, **caractérisé en ce qu'**une régulation ciblée de la température superficielle du soufflet (3) est effectuée au moyen des mesures de température.

6. Dispositif selon l'une quelconque des revendications précédentes, **caractérisé en ce que** la régulation s'effectue en fonction d'un écart à la valeur nominale de température par l'intermédiaire d'une longueur de choc de vapeur ajustée et/ou d'un ajustement de la pression de vapeur.

7. Dispositif selon l'une quelconque des revendications précédentes, **caractérisé en ce que** le pyromètre à rayonnement transmet les données de température par l'intermédiaire d'une liaison radio sans fil à un récepteur de signaux.
